# EUROPEAN PATENT APPLICATION

(11) **EP 2 166 767 A1**
(43) Date of publication of application: **24.03.2010**
(21) Application number: 09162362.9
(22) Date of filing: 10.06.2009
(51) Int. Cl.: H04N 7/24, H04N 7/62

(54) **Signal processing apparatus and method thereof**

(30) Priority: 28.08.2008 KR 20080084418
(71) Applicant: Samsung Electronics Co., Ltd., Suwon-si, Gyeonggi-do 442-742 (KR)
(72) Inventor: Kim, Ung-jung, Hwaseong-si Gyeonggi-do (KR)
(74) Representative: Davies, Robert Ean

(57) **Abstract**

A signal processing apparatus and method are provided. The signal processing apparatus includes a counter which counts the number of internal clocks; a clock adjustment value determiner which compares a count value of external clocks contained in a broadcast signal to a count value of internal clocks obtained by the counter, and determines a clock adjustment value according to a result of the comparing operation; and a clock adjuster which adjusts the number of the internal clocks based on the determined clock adjustment value. Therefore, it is possible to synchronize the count value of external clocks with the count value of internal clocks using a simple structure.

## Description

This application claims priority from Korean Patent Application No. 10-2008-0084418, filed on August 28, 2008, in the Korean Intellectual Property Office, the disclosure of which is incorporated herein by reference in its entirety.

Apparatuses and methods consistent with the present invention relate to processing signals, and more particularly, to processing signals in order to synchronize a clock output from an encoder of a broadcast transmitter with a clock output from a decoder of a broadcast receiver using a crystal oscillator.

A broadcast transmitter includes an encoder for encoding a broadcast signal, and a broadcast receiver includes a decoder for decoding the encoded broadcast signal output from the broadcast transmitter. Accordingly, there is a need for technologies for synchronizing a system clock of the encoder with a system clock of the decoder.

A voltage controlled crystal oscillator (VCXO) is typically used to synchronize a system clock of the encoder with a system clock of the decoder. Such a VCXO refers to an oscillator that allows a frequency to satisfy allowable specifications according to a change in variably controlled voltage.

The VCXO is configured with a phase-locked loop (PLL). Accordingly, an input clock is used as a source of the PLL, so a change in the VCXO affects an output clock, which may cause a system to be unstable. Additionally, the VCXO has a complicated structure due to the addition of the PLL. Furthermore, crystals used in the VCXO are expensive and it is difficult to achieve the specifications of the crystals, so it is inefficient to use the VCXO.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Embodiments of the present invention provide a signal processing apparatus and method thereof to synchronize an internal clock generated by a crystal oscillator with an external clock output from an encoder of a broadcast transmitter.

According to an aspect of the present invention, there is provided a signal processing apparatus, comprising a counter which counts the number of internal clocks, a clock adjustment value determiner which compares a count value of external clocks contained in a broadcast signal to a count value of internal clocks obtained by the counter, and determines a clock adjustment value according to a result of the comparing operation, and a clock adjuster which adjusts the number of internal clocks based on the determined clock adjustment value.

The signal processing apparatus may further comprise a crystal oscillator which generates internal clocks.

The clock adjuster may receive the internal clocks generated by the crystal oscillator, and transmit the received internal clocks to the counter.

The count value of external clocks may be a program clock reference (PCR), and the count value of internal clocks may be a system time clock (STC).

The signal processing apparatus may further comprise a demultiplexer (DEMUX) which extracts the count value of external clocks from the broadcast signal and transmits the extracted count value of external clocks to the clock adjustment value determiner.

If the count value of external clocks is greater than the count value of internal clocks, the clock adjustment value determiner may determine the clock adjustment value such that the number of internal clocks is increased, and if the count value of external clocks is less than the count value of internal clocks, the clock adjustment value determiner may determine the clock adjustment value such that the number of internal clocks is decreased.

The counter may re-count the number of internal clocks adjusted by the clock adjuster, and transmit a re-count value obtained by the re-counting operation to the clock adjustment value determiner.

The signal processing apparatus may further comprise a decoder which decodes audio and video signals contained in the broadcast signal using the re-count value.

According to another aspect of the present invention, there is provided a signal processing method, comprising counting the number of internal clocks, comparing a count value of external clocks contained in a broadcast signal to a count value of internal clocks obtained by the counting operation, determining a clock adjustment value according to a result of the comparing operation, and adjusting the number of internal clocks based on the determined clock adjustment value.

The signal processing method may further comprise receiving the internal clocks generated by a crystal oscillator.

The count value of external clocks may be a program clock reference (PCR), and the count value of internal clocks may be a system time clock (STC).

The signal processing method may further comprise extracting the count value of external clocks from the broadcast signal.

The determining may comprise, if the count value of external clocks is greater than the count value of internal clocks, determining the clock adjustment value such that the number of internal clocks is increased; and if the count value of external clocks is less than the count value of internal clocks, determining the clock adjustment value such that the number of internal clocks is decreased.

The signal processing method may further comprise re-counting the adjusted number of internal clocks.

The signal processing method may further comprise decoding audio and video signals contained in the broadcast signal using a re-count value obtained by the re-counting operation.

For a better understanding of the invention, and to show how embodiments of the same may be carried into effect, reference will now be made, by way of example, to the accompanying diagrammatic drawings in which:
FIG. 1 is a block diagram of a signal processing apparatus according to an exemplary embodiment of the present invention; and
FIG. 2 is a flowchart explaining a signal processing method according to an exemplary embodiment of the present invention.

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

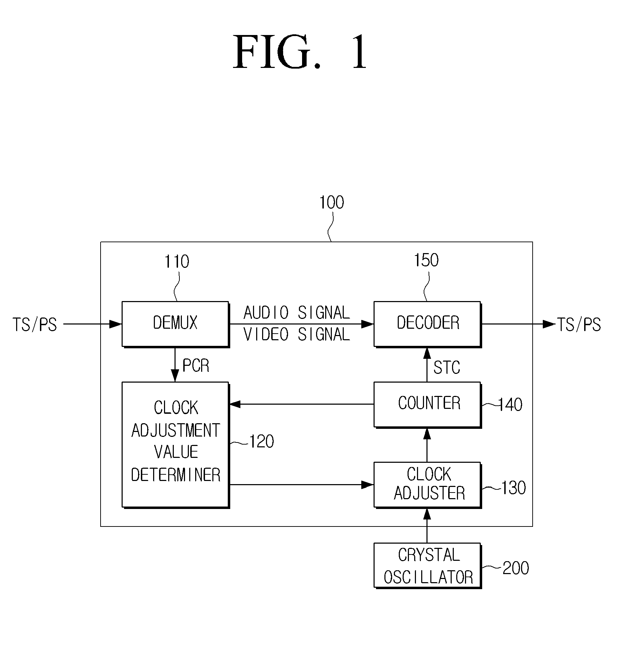

FIG. 1 is a block diagram of a signal processing apparatus according to an exemplary embodiment of the present invention.

The signal processing apparatus of FIG. 1 comprises a clock synchronizing apparatus 100 and a crystal oscillator 200. The clock synchronizing apparatus 100 comprises a demultiplexer (DEMUX) 110, a clock adjustment value determiner 120, a clock adjuster 130, a counter 140 and a decoder 150.

The clock synchronizing apparatus 100 may function as a decoder of a broadcast receiver. The clock synchronizing apparatus 100 receives internal clocks generated by the crystal oscillator 200. Here, a crystal applied to the crystal oscillator 200 requires low precision so it is easy to implement. Additionally, the crystal is lower in price than a crystal applied to a conventional voltage controlled crystal oscillator (VCXO).

The DEMUX 110 receives a broadcast signal via a channel, namely a transport stream (TS) or a program stream (PS), and demultiplexes the received TS or PS, so that the TS or PS is divided into audio and video signals and a count value of external clocks.

After demultiplexing, the DEMUX 110 transmits the audio and video signals to the decoder 150, and transmits the count value of external clocks to the clock adjustment value determiner 120.

The count value of external clocks may be a program clock reference (PCR). A PCR refers to a value obtained at a predetermined moment by a counter operated with a system clock of a broadcast station, and is generally counted at a frequency interval of 27 MHz.

The clock adjustment value determiner 120 compares the count value of external clocks output from the DEMUX 110 to a count value of internal clocks, to determine a clock adjustment value based on the result of comparing. In the exemplary embodiment of the present invention, the count value of external clocks refers to a count value contained in a broadcast signal received from a broadcast transmitter, and the count value of internal clocks refers to a count value of clocks generated inside a broadcast receiver having the clock synchronizing apparatus 100. The count value of internal clocks may be a system time clock (STC).

The clock adjustment value determiner 120 receives the count value of external clocks, namely the PCR, extracted by the DEMUX 110, receives the count value of internal clocks, namely the STC, from the counter 140, and then compares the two received values.

The clock adjustment value determiner 120 determines a clock adjustment value according to the result of comparing the two received values. In more detail, if the count value of external clocks is greater than the count value of internal clocks (namely, PCR > STC), the clock adjustment value determiner 120 may determine the clock adjustment value such that the number of internal clocks is increased. In this situation, the clock adjustment value may be positive (+). Alternatively, if the count value of external clocks is less than or equal to the count value of internal clocks (namely, PCR < STC or PCR = STC), the clock adjustment value determiner 120 may determine the clock adjustment value such that the number of internal clocks is decreased. In this situation, the clock adjustment value may be negative (-) or zero (0).

After determining the clock adjustment value as described above, the clock adjustment value determiner 120 transmits the determined clock adjustment value to the clock adjuster 130.

During the initial operation of the clock synchronizing apparatus 100, the internal clocks generated by the crystal oscillator 200 are transferred to the counter 140 by bypassing the clock adjuster 130. Additionally, the clock adjuster 130 receives the clock adjustment value from the clock adjustment value determiner 120, adjusts the internal clocks generated by the crystal oscillator 200 based on the clock adjustment value, and then transmits the adjusted internal clocks to the counter 140.

In more detail, if the clock adjustment value is set such that the number of internal clocks is increased, that is if the clock adjustment value is positive, the clock adjuster 130 may increase the number of internal clocks by a number corresponding to the clock adjustment value. Alternatively, if the clock adjustment value is set such that the number of internal clocks is decreased, that is if the clock adjustment value is negative or zero, the clock adjuster 130 may decrease the number of internal clocks by a number corresponding to the clock adjustment value.

The counter 140 counts the number of internal clocks generated by the crystal oscillator 200 during a preset period. The counting period of the counter 140 is set to be equal to the period for counting external clocks, so that the counter 140 may count the number of internal clocks at a frequency interval of 27 MHz.

The counter 140 receives the internal clocks generated by the crystal oscillator 200 through the clock adjuster 130. Accordingly, during the initial operation of the clock synchronizing apparatus 100, the counter 140 counts the number of internal clocks, which are generated by the crystal oscillator 200 and bypass the clock adjuster 130 so as not to be adjusted. However, after the initial operation, the counter 140 counts the number of internal clocks adjusted by the clock adjuster 130.

The decoder 150 receives the count value of internal clocks, namely the STC, from the counter 140, and decodes the audio and video signals output from the DEMUX 110 using the received STC. The count value of internal clocks, namely the STC, received by the decoder 150 is synchronized with the count value of external clocks by the operations of the clock adjustment value determiner 120, the clock adjuster 130 and the counter 140.

The clock synchronizing apparatus 100 may synchronize the internal clocks with the external clocks by the operations of the clock adjustment value determiner 120 and the clock adjuster 130. Therefore, it is possible to provide a structure for synchronizing a PCR with an STC more easily than a decoder of a conventional broadcast receiver configured with a VCXO and PLL.

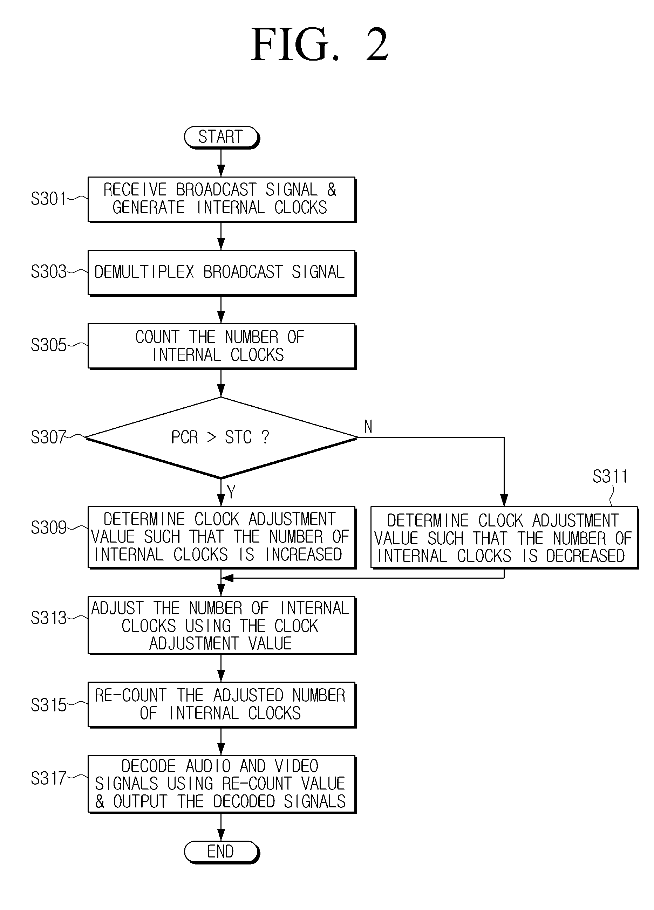

FIG. 2 is a flowchart explaining a signal processing method according to an exemplary embodiment of the present invention.

A signal processing method for clock synchronization is now described with reference to FIGS. 1 and 2.

The DEMUX 110 receives a broadcast signal, namely a transport stream (TS) or a program stream (PS), and the crystal oscillator 200 generates internal clocks (S301). Here, the broadcast signal received by the DEMUX 110 refers to a signal which is transmitted from a broadcast transmitter to a broadcast receiver and demodulated or equalized.

The DEMUX 110 demultiplexes the received broadcast signal, namely the TS or PS, so that the TS or PS is divided into audio and video signals and a count value of external clocks, namely a PCR (S303). The DEMUX 110 then transmits the audio and video signals to the decoder 150, and transmits the PCR to the clock adjustment value determiner 120.

If the crystal oscillator 200 generates internal clocks, the counter 140 receives the generated internal clocks via the clock adjuster 130, and counts the number of internal clocks during a preset period, for example at a frequency interval of 27 MHz (S305). The counter 140 then transmits the STC to the clock adjustment value determiner 120. Here, a count value of internal clocks obtained after the counting operation is an STC.

The clock adjustment value determiner 120 receives the PCR from the DEMUX 110, receives the STC from the counter 140, and compares the size of the received PCR and STC (S307).

The clock adjustment value determiner 120 determines a clock adjustment value according to the result of comparing the PCR and STC. If the PCR is greater than the STC (S307-Y), the clock adjustment value determiner 120 may determine the clock adjustment value such that the number of internal clocks is increased (S309). If the PCR is less than the STC (S307-N), the clock adjustment value determiner 120 may determine the clock adjustment value such that the number of internal clocks is decreased (S311).

The clock adjustment value determiner 120 transfers the determined clock adjustment value to the clock adjuster 130, and the clock adjuster 130 then adjusts the number of internal clocks based on the received clock adjustment value (S313). For example, if the clock adjustment value is positive, the clock adjuster 130 may increase the number of internal clocks by a number corresponding to the clock adjustment value, or if the clock adjustment value is negative, the clock adjuster 130 may decrease the number of internal clocks by a number corresponding to the clock adjustment value.

The clock adjuster 130 transmits the adjusted internal clocks to the counter 140. The counter 140 re-counts the number of internal clocks received from the clock adjuster 130 (S315). The counter 140 then transmits a re-count value obtained by the re-counting operation to the clock adjustment value determiner 120 and the decoder 150.

The decoder 150 decodes the audio and video signals using the re-count value received from the counter 140, and outputs the decoded audio and video signals (S317).

The clock synchronizing apparatus 100 repeats operations S301 to S317 while receiving broadcast signals. Since the initial internal clocks generated by the crystal oscillator 200 is transmitted to the counter 140 by bypassing the clock adjuster 130, the counter 140 counts the initial internal clocks which are not adjusted. After the initial operation of the crystal oscillator 200, the counter 140 counts internal clocks adjusted by the clock adjuster 130.

Operations S301 to S317 are repeated by the clock synchronizing apparatus 100 while broadcast signals are received, so a count value of internal clocks generated by the crystal oscillator 200 (namely, an STC) may be made to follow a count value contained in a broadcast signal (namely, a PCR). Therefore, it is possible to synchronize the STC with the PCR.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A signal processing apparatus, comprising:
a counter which counts the number of a first set of clocks to obtain a count value of the first set of clocks;
a clock adjustment value determiner which compares a count value of a second set of clocks contained in a signal to the count value of the first set of clocks, and determines a clock adjustment value according to a result of the comparing operation; and
a clock adjuster which adjusts the number of the first set of clocks based on the determined clock adjustment value.

2. The signal processing apparatus as claimed in claim 1,
wherein the first set of clocks are internal clocks; and
the second set of clocks are external clocks; and
the signal processing apparatus further comprises a crystal oscillator which generates the internal clocks.

3. The signal processing apparatus as claimed in claim 2, wherein the clock adjuster receives the internal clocks generated by the crystal oscillator, and transmits the received internal clocks to the counter.

4. The signal processing apparatus according to any one of claims 1 to 3, wherein the count value of the second set of clocks is a program clock reference (PCR), and the count value of the first set of clocks is a system time clock (STC).

5. The signal processing apparatus according to any one of claims 1 to 4, further comprising:
a demultiplexer (DEMUX) which extracts the count value of the second set of clocks from the broadcast signal and transmits the extracted count value of the second set of clocks to the clock adjustment value determiner.

6. The signal processing apparatus according to any one of claims 1 to 5, wherein, if the count value of the second set of clocks is greater than the count value of the first set of clocks, the clock adjustment value determiner determines the clock adjustment value such that the number of the first set of clocks is increased, and
if the count value of the second set of clocks is less than the count value of the first set of clocks, the clock adjustment value determiner determines the clock adjustment value such that the number of the first set of clocks is decreased.

7. The signal processing apparatus according to any one of claims 1 to 6, wherein the counter re-counts the number of the first set of clocks adjusted by the clock adjuster, and transmits a re-count value obtained by the re-counting operation to the clock adjustment value determiner.

8. The signal processing apparatus as claimed in claim 7, further comprising:
a decoder which decodes audio and video signals contained in the signal using the re-count value.

9. A signal processing method, comprising:
counting the number of a first set of clocks to obtain a count value of the first set of clocks;
comparing a count value of a second set of clocks contained in a signal to the count value of the first set of clocks obtained by the counting operation;
determining a clock adjustment value according to a result of the comparing operation; and
adjusting the number of the first set of clocks based on the determined clock adjustment value.

10. The signal processing method as claimed in claim 9,
wherein the first set of clocks are internal clocks; and
the second set of clocks are external clocks contained in a broadcast signal; and
the signal processing method further comprises receiving the internal clocks generated by a crystal oscillator.

11. The signal processing method as claimed in claim 9 or 10, wherein the count value of the second set of clocks is a program clock reference (PCR), and the count value of the first set of clocks is a system time clock (STC).

12. The signal processing method according to any one of claims 9 to 11, further comprising:
extracting the count value of the second set of clocks from the broadcast signal.

13. The signal processing method according to any one of claims 9 to 12, wherein the determining comprises, if the count value of the second set of clocks is greater than the count value of the first set of clocks, determining the clock adjustment value such that the number of the first set of clocks is increased, and if the count value of the second set of clocks is less than the count value of the first set of clocks, determining the clock adjustment value such that the number of the first set of clocks is decreased.

14. The signal processing method according to any one of claims 9 to 13, further comprising:
re-counting the adjusted number of the first set of clocks.

15. The signal processing method as claimed in claim 14, further comprising:
decoding audio and video signals contained in the broadcast signal using a re-count value obtained by the re-counting operation.
